(19) Europäisches Patentamt
European Patent Office
Office européen des brevets

(11) **EP 4 787 482 A1**

(12) **EUROPEAN PATENT APPLICATION**
published in accordance with Art. 153(4) EPC

(43) Date of publication:
**05.08.2026 Bulletin 2026/32**

(21) Application number: **24871857.9**

(22) Date of filing: **11.09.2024**

(51) International Patent Classification (IPC):
$H01M\ 4/525^{(2010.01)}$    $H01M\ 4/36^{(2006.01)}$
$H01M\ 4/131^{(2010.01)}$    $H01M\ 4/505^{(2010.01)}$

(52) Cooperative Patent Classification (CPC):
**H01M 4/131; H01M 4/36; H01M 4/505;
H01M 4/525; Y02E 60/10**

(86) International application number:
**PCT/JP2024/032517**

(87) International publication number:
**WO 2025/070060 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023 JP 2023169468**

(71) Applicant: **Panasonic Intellectual Property
Management Co., Ltd.
Kadoma-shi, Osaka 571-0057 (JP)**

(72) Inventors:
• **ASAKA, Keisuke
kadoma-shi, Osaka 571-0057 (JP)**
• **SUZUKI, Hirotetsu
kadoma-shi, Osaka 571-0057 (JP)**

(74) Representative: **Novagraaf International SA
Chemin de l'Echo 3
1213 Onex, Geneva (CH)**

(54) **POSITIVE ELECTRODE ACTIVE MATERIAL AND SECONDARY BATTERY**

(57)     Provided is a positive electrode active material capable of reducing DC resistance of a secondary battery and improving charge/discharge cycle characteristics. This positive electrode active material is characterized by including: a composite material including a lithium transition metal composite oxide and a carbonaceous film formed on a surface of the lithium transition metal composite oxide; and a metal oxide including at least one from among W, Mo, and Nb, the carbonaceous film containing at least one of an alkali metal other than Li and an alkaline earth metal.

EP 4 787 482 A1

**Description**

TECHNICAL FIELD

The disclosure relates to a positive electrode active material and a secondary battery.

BACKGROUND

In recent years, as a secondary battery having a high output and a high capacity, a secondary battery has been widely used, in which the secondary battery includes a positive electrode, a negative electrode, and an electrolyte, and performs charging and discharging by moving Li ions and the like between the positive electrode and the negative electrode.

For example, Patent Literature 1 and Patent Literature 2 disclose use of a composite, as an active material for secondary batteries, in which a carbonaceous film is formed on the surface of an active material body.

CITATION LIST

PATENT LITERATURE

Patent Literature 1: JP 2009-140876 A
Patent Literature 2: JP 2001-015111 A

SUMMARY

In secondary batteries, a reduction in direct-current internal resistance is required due to an increase in demand for rapid charging. A further improvement in charge/discharge cycle characteristics is also required in secondary batteries.

Therefore, an object of the present disclosure is to provide a positive electrode active material that enables a reduction in direct-current internal resistance of a secondary battery and an improvement in charge/discharge cycle characteristics.

A positive electrode active material according to one aspect of the present disclosure includes a composite material including a lithium transition metal composite oxide and a carbonaceous film formed on a surface of the lithium transition metal composite oxide, and includes a metal oxide including at least one of W, Mo, or Nb, and the carbonaceous film contains at least one of an alkali metal other than Li or an alkaline earth metal.

A secondary battery according to one aspect of the present disclosure includes a positive electrode including the positive electrode active material, a negative electrode, and an electrolyte.

The positive electrode active material according to one aspect of the present disclosure enables reduction in direct-current internal resistance of a secondary battery and an improvement in charge/discharge cycle characteristics.

BRIEF DESCRIPTION OF DRAWINGS

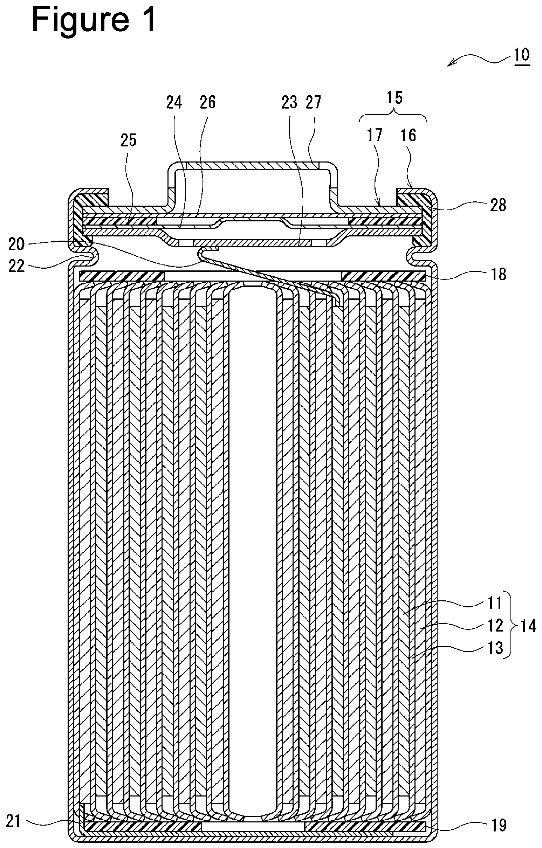

FIG. 1 is a sectional view of a secondary battery according to an example of an embodiment.

DESCRIPTION OF EMBODIMENTS

Hereinafter, an example of an embodiment of a non-aqueous electrolyte secondary battery according to the present disclosure will be described.

FIG. 1 is a sectional view of a secondary battery according to an example of an embodiment. A secondary battery 10 shown in FIG. 1 includes a wound electrode assembly 14 in which a positive electrode 11 and a negative electrode 12 are wound with a separator 13 interposed therebetween, an electrolyte, insulating plates 18 and 19 disposed on the upper and lower sides of the electrode assembly 14 respectively, and a battery case 15 housing the above-described members. The battery case 15 includes a bottomed cylindrical case body 16 and a sealing assembly 17 that seals an opening of the case body 16. Instead of the wound electrode assembly 14, an electrode assembly having another form, such as a stacked electrode assembly in which positive electrodes and negative electrodes are alternately stacked with separators interposed therebetween, may be applied. Examples of the battery case 15 include metal cases having a cylindrical shape, a square shape, a coin shape, a button shape, or the like, and resin cases (so-called laminated cases) formed by lamination with a resin sheet.

The electrolyte has, for example, ion conductivity (for example, lithium ion conductivity). The electrolyte may be a liquid electrolyte (electrolytic solution) or a solid electrolyte.

The liquid electrolyte (electrolytic solution) contains, for example, a non-aqueous solvent and an electrolyte salt dissolved in the non-aqueous solvent. Examples of the non-aqueous solvent to be used include esters, ethers, nitriles, amides, and mixed solvents of two or more thereof. The non-aqueous solvent is, for example, ethylene carbonate (EC), ethyl methyl carbonate (EMC), dimethyl carbonate (DMC), diethyl carbonate (DEC), or a mixed solvent thereof. The non-aqueous solvent may contain a halogensubstituted product (for example, fluoroethylene carbonate or the like) in which at least a part of hydrogen in the above-described solvent is substituted with a halogen atom such as fluorine. As the electrolyte salt, for example, a lithium salt such as $LiPF_6$ is used.

Examples of the usable solid electrolyte include solid or gel polymer electrolytes and inorganic solid electrolytes. For example, the polymer electrolyte contains a lithium salt and a matrix polymer or contains a non-aqueous solvent, a lithium salt, and a matrix polymer. Examples of the matrix polymer to be used include polymer materials that absorb a non-aqueous solvent to gelate. Examples of the polymer material include fluororesins, acrylic resins, and polyether resins. Examples of the usable inorganic solid electrolyte include materials known in the technical field of, for example, all-solid-state lithium ion secondary batteries (such as oxide-based solid electrolytes, sulfide-based solid electrolytes, and halogen-based solid electrolytes). Note that although the electrolytes described above as examples are non-aqueous electrolytes, the electrolyte is not limited to a non-aqueous electrolyte, and may be an aqueous electrolyte.

The case body 16 is, for example, a bottomed cylindrical metal container. A gasket 28 is provided between the case body 16 and the sealing assembly 17 to ensure the sealability inside the battery. The case body 16 has a projecting portion 22 in which, for example, a part of the side part of the case body 16 protrudes inward to support the sealing assembly 17. The projecting portion 22 is preferably formed in an annular shape along the circumferential direction of the case body 16, and supports the sealing assembly 17 on the top surface of the projecting portion 22.

The sealing assembly 17 has a structure formed by stacking a filter 23, a lower vent member 24, an insulating member 25, an upper vent member 26, and a cap 27 in this order from the electrode assembly 14 side. Each member included in the sealing assembly 17 has, for example, a disk shape or a ring shape, and the members excluding the insulating member 25 are electrically connected to each other. The lower vent member 24 and the upper vent member 26 are connected to each other at their central parts, and the insulating member 25 is interposed between the circumferential parts of the lower vent member 24 and the upper vent member 26. When the internal pressure of the secondary battery 10 increases due to heat generated by an internal short circuit or the like, for example, the lower vent member 24 deforms so as to push the upper vent member 26 up toward the cap 27 side and breaks, and thus the current pathway between the lower vent member 24 and the upper vent member 26 is cut off. When the internal pressure further increases, the upper vent member 26 breaks, and gas is discharged from an opening of the cap 27.

In the secondary battery 10 shown in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to the lower surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to the bottom inner surface of the case body 16 by welding or the like, and the case body 16 serves as a negative electrode terminal.

Hereinafter, the positive electrode 11, the negative electrode 12, and the separator 13 included in the secondary battery 10 will be described in detail.

[Positive Electrode]

The positive electrode 11 includes a positive electrode current collector and a positive electrode mixture layer disposed on the positive electrode current collector. The positive electrode mixture layer may be disposed on one surface or both surfaces of the positive electrode current collector. As the positive electrode current collector, a foil of a metal, such as aluminum or an aluminum alloy, that is stable in a potential range of the positive electrode 11, or a film in which the metal is disposed on its surface layer, or the like can be used. The positive electrode mixture layer contains a positive electrode active material. The positive electrode mixture layer may contain a conductive agent and a binder. The positive electrode 11 can be produced by, for example, applying a positive electrode mixture slurry containing the positive electrode active material, the conductive agent, the binder, and the like to a surface of the positive electrode current collector, drying the resulting coating film, and then rolling the coating film using a roller or the like.

Examples of the conductive agent contained in the positive electrode mixture layer include carbon materials such as carbon black, acetylene black, Ketjenblack, graphite, carbon nanotubes, carbon nanofibers, and graphene. The content of the conductive agent is, for example, greater than or equal to 0.01 mass% and less than or equal to 10 mass%, and preferably greater than or equal to 0.1 mass% and less than or equal to 5 mass% with respect to the total mass of the positive electrode mixture layer.

Examples of the binder contained in the positive electrode mixture layer include fluorine-containing resins such as polytetrafluoroethylene (PTFE) and polyvinylidene fluoride (PVdF), polyacrylonitrile (PAN), polyimides, acrylic resins, and polyolefins. In addition, carboxymethyl cellulose (CMC) or its salt, polyethylene oxide (PEO), or the like may be used. The content of the binder is, for example, greater than or equal to 0.1 mass% and less than or equal to 10 mass%, and preferably greater than or equal to 0.5 mass% and less than or equal to 5 mass% with respect to the total mass of the positive electrode mixture layer.

The positive electrode active material contained in the positive electrode mixture layer includes a composite material including a lithium transition metal composite oxide and a carbonaceous film formed on a surface of the lithium transition metal composite oxide, and includes a metal oxide including at least one of W, Mo, or Nb. The carbonaceous film contains at least one of an alkali metal other than Li or an alkaline earth metal. It is considered that formation of the carbonaceous film on the surface of the lithium transition metal-containing oxide improves the electron conductivity of the positive electrode active material, and thus leads to a reduction in direct-current internal resistance of a secondary battery. It is also considered that the inclusion of the metal oxide in the positive electrode active material suppresses a side reaction between the lithium transition metal oxide and the electrolyte, or improves the ion conductivity of the lithium transition metal oxide, and thus leads to an improvement in charge/discharge cycle characteristics of a secondary battery.

The lithium transition metal composite oxide includes, for example, secondary particles formed by aggregation of primary particles. Here, the surface of the lithium transition metal composite oxide means the surface of the secondary particles of the lithium transition metal composite oxide. That is, the carbonaceous film is present at least on the surface of the secondary particles of the lithium transition metal composite oxide. The carbonaceous film may be present in a spot-like manner to cover at least a part of the surface of the secondary particles of the lithium transition metal composite oxide, or may be present to cover the entire surface of the secondary particles. The carbonaceous film may be present at an interface where primary particles of the lithium transition metal composite oxide are in contact with each other. In the present embodiment, the lithium transition metal composite oxide having a surface on which the carbonaceous film is formed is preferably contained at a content of, for example, greater than or equal to 90 mass% with respect to the total mass of the positive electrode active material.

The metal oxide is preferably adhered to a surface of the composite material. That is, the metal oxide may be adhered to a part of the surface of the composite material, or may be adhered to the entire surface of the composite material. Here, the surface of the composite material refers to the surface of the secondary particles of the lithium transition metal composite oxide or the surface of the carbonaceous film formed on the surface of the secondary particles. The adhesion of the metal oxide to the surface of the composite material may suppress a side reaction between the lithium transition metal oxide and the electrolyte, or may improve the ion conductivity of the lithium transition metal oxide, and as a result, may lead to a further improvement in charge/discharge cycle characteristics of a secondary battery.

The primary particles forming the secondary particles of the lithium transition metal composite oxide have a particle diameter of, for example, greater than or equal to $0.02~\mu m$ and less than or equal to $2~\mu m$. The particle diameter of each primary particle is measured as a diameter of a circumscribed circle in a particle image observed with a scanning electron microscope (SEM). The secondary particles of the lithium transition metal composite oxide have an average particle diameter of, for example, greater than or equal to $2~\mu m$ and less than or equal to $30~\mu m$. Here, the average particle diameter means a volume-based median diameter (D50). D50 means a particle diameter in which the cumulative frequency in a volume-based particle size distribution is 50% from the smallest particle size, and is also referred to as a median diameter. The particle size distribution of the secondary particles of the lithium transition metal composite oxide can be measured using a laser diffraction type particle size distribution measuring apparatus (for example, MT3000II manufactured by MicrotracBEL Corp.) using water as a dispersion medium.

The lithium transition metal composite oxide has, for example, a layered rock salt structure belonging to a space group R-3m, a space group C2/m, or the like. From the viewpoint of higher capacity, stability of a crystal structure, and the like, the lithium transition metal composite oxide preferably has a layered rock salt structure belonging to the space group R-3m. The layered rock salt structure of the lithium transition metal composite oxide may include a transition metal layer, a Li layer, and an oxygen layer. As Li ions present in the Li layer reversibly enter and exit, a charging-and-discharging reaction of the battery proceeds.

The content of Co in the lithium transition metal composite oxide is preferably less than or equal to 5 mol%, more preferably less than or equal to 2 mol%, still more preferably less than or equal to 1 mol%, and particularly preferably 0.1 mol% with respect to the total number of moles of metal elements excluding Li. Co is a rare metal and is expensive, and therefore the amount of Co used is preferably small.

The lithium transition metal composite oxide may be represented by a general formula $Li_aNi_{1-x-y}Mn_xM_yO_{2+b}$. In the general formula, $0.9 \leq a \leq 1.1$, $0 \leq x \leq 0.5$, $0 \leq y \leq 0.1$, $0.5 \leq 1 - x - y \leq 0.95$, and $-0.05 \leq b \leq 0.05$ are satisfied, and M represents an element other than Li, Ni, Mn, and oxygen. The value of "a" representing the molar ratio of lithium increases or decreases due to charging and discharging. The element M is preferably at least one selected from the group consisting of Co, Nb, Al, Zr, B, Fe, Cu, Zn, Sn, W, Mo, Si, Ti, Fe, and Cr from the viewpoint of, for example, stability of the crystal structure of the lithium transition metal composite oxide.

The content of the elements included in the lithium transition metal composite oxide can be measured with an inductively coupled plasma atomic emission spectrometer (ICP-AES), an electron probe microanalyzer (EPMA), or the like.

The carbonaceous film formed on the surface of the lithium transition metal composite oxide only needs to contain at least one of an alkali metal other than Li or an alkaline earth metal, and preferably contains at least one of Na or K from the viewpoint of enhancing the electron conductivity of the positive electrode active material. The carbonaceous film preferably further contains S from the viewpoint of enhancing the electron conductivity of the positive electrode active material. The carbonaceous film may contain Li. The presence of S in the carbonaceous film can be confirmed by energy dispersive X-ray spectroscopy (TEM-EDX). The presence of the alkali metal such as Na or K and the alkaline earth metal in the carbonaceous film can be confirmed by X-ray photoelectron spectroscopy (XPS).

The carbonaceous film has a thickness of, for example, less than or equal to 30 nm. The lower limit of the thickness of the carbonaceous film is, for example, 1 nm. The thickness of the carbonaceous film is measured using an image of a cross section of the positive electrode active material observed with a transmission electron microscope (TEM).

Hereinafter, an example of a method of forming a carbonaceous film on the surface of the lithium transition metal composite oxide will be described.

(1) An anionic surfactant is dissolved in water to produce an aqueous solution.
(2) A powder of the lithium transition metal composite oxide is added to the aqueous solution, and the mixture is stirred to prepare a suspension in which the lithium transition metal composite oxide is dispersed in the aqueous solution.
(3) The suspension is filtered, and the obtained residue is fired, and thus a carbonaceous film can be formed on the surface of the lithium transition metal composite oxide.

The anionic surfactant is adsorbed on the surface of the lithium transition metal composite oxide in water, and a substantially uniform carbonaceous film can be produced. The surfactant is not particularly limited as long as the surfactant contains C and at least one of an alkali metal other than Li or an alkaline earth metal. The surfactant preferably contains at least one of Na or K. The surfactant may further contain S. Examples of the surfactant include sodium lauryl sulfate and potassium lauryl sulfate. The concentration of the surfactant in the aqueous solution is, for example, greater than or equal to 0.1 mass% and less than or equal to 10 mass%, and preferably greater than or equal to 1 mass% and less than or equal to 10 mass%.

Examples of the metal oxide including at least one of W, Mo, or Nb include single oxides such as tungsten oxide, molybdenum oxide, and niobium oxide, binary oxides such as W-Mo oxide, W-Nb oxide, and Mo-Nb oxide, and ternary oxides such as W-Mo-Nb oxide. The metal oxide including at least one of W, Mo, or Nb may be an oxide including a metal element other than W, Mo, and Nb as long as the metal oxide includes at least one of W, Mo, or Nb as a main component. The term "main component" means a metal element contained at the largest content among the metal elements included in the metal oxide. The metal oxide preferably contains, for example, tungsten oxide from the viewpoint of improving charge/discharge cycle characteristics of a secondary battery. Examples of the tungsten oxide include $WO_2$, $WO_3$, and $W_2O_5$, and among these, for example, $WO_3$ is preferable from the viewpoint of improving charge/discharge cycle characteristics of a secondary battery.

Examples of the method of adhering the metal oxide to the surface of the composite material include a method of mechanically mixing the metal oxide and the composite material. Furthermore, after mixing the composite material and the metal oxide, the mixture is preferably heat-treated at a predetermined temperature. Thus, the adhesion between the composite material and the metal oxide can be enhanced. The temperature of the heat treatment is, for example, in the range of greater than or equal to 100°C and less than or equal to 300°C.

The content of the metal oxide is, for example, preferably greater than or equal to 0.05 mol% and less than or equal to 10 mol%, and more preferably greater than or equal to 0.1 mol% and less than or equal to 5 mol% in terms of elements of W, Mo, and Nb with respect to the total amount of metal elements excluding Li in the lithium transition metal composite oxide, from the viewpoint of improving charge/discharge cycle characteristics of a secondary battery. The amounts of the elements of W, Mo, and Nb can be determined, for example, by washing the composite material with an acid solution such as hydrochloric acid for 5 minutes and measuring the amounts of the elements of W, Mo, and Nb eluted in the acid solution with an inductively coupled plasma atomic emission spectrometer.

The positive electrode mixture layer may contain another positive electrode active material in addition to the lithium transition metal composite oxide having a surface on which the carbonaceous film is formed (composite material) and the metal oxide. Examples of another positive electrode active material include lithium transition metal composite oxides having a surface on which a carbonaceous film is not formed.

[Negative Electrode]

The negative electrode 12 includes, for example, a negative electrode current collector and a negative electrode mixture layer disposed on the negative electrode current collector. The negative electrode mixture layer may be disposed on one surface of the negative electrode current collector, or both surfaces of the negative electrode current collector. As the negative electrode current collector, a foil of a metal, such as copper or a copper alloy, that is stable in a potential range of the negative electrode 12, a film in which the metal is disposed on its surface layer, or the like can be used. The negative electrode mixture layer contains, for example, a negative electrode active material and a binder. The negative electrode 12 can be produced by, for example, applying a negative electrode mixture slurry containing the negative electrode active material, the binder, and the like to a surface of the negative electrode current collector, drying the resulting coating film, and then rolling the coating film using a roller or the like.

The negative electrode active material contained in the negative electrode mixture layer is not particularly limited as long as the negative electrode active material can reversibly occlude and discharge lithium ions, and a carbon material such as graphite is generally used. The graphite may be any of natural graphite such as scale-like graphite, massive graphite, or earthy graphite and artificial graphite such as massive artificial graphite or graphitized mesophase carbon microbeads. The negative electrode active material to be used may be, for example, a metal alloyed with Li, such as Si or Sn, a metal compound containing Si, Sn, or the like, or a lithium titanium composite oxide. For example, a Si-containing compound represented by $SiO_x$ ($0.5 \leq x \leq 1.6$), a Si-containing compound in which Si fine particles are dispersed in a lithium silicate phase represented by $Li_{2y}SiO_{(2+y)}$ ($0 < y < 2$), or the like may be used in combination with graphite.

Examples of the binder contained in the negative electrode mixture layer include styrene butadiene rubber (SBR), nitrile-butadiene rubber (NBR), carboxymethyl cellulose (CMC) and its salts (CMC-Na, CMC-K, CMC-NH$_4$, and the like, and partially neutralized salts may be used), polyacrylic acid (PAA) and its salts (PAA-Na, PAA-K, and the like, and partially neutralized salts may be used), and polyvinyl alcohol (PVA). These may be used singly or in combination of two or more kinds thereof. The content of the binder is, for example, greater than or equal to 0.1 parts by mass and less than or equal to 10 parts by mass, and preferably greater than or equal to 0.5 parts by mass and less than or equal to 5 parts by mass with respect to 100 parts by mass of the negative electrode active material. The negative electrode mixture layer may contain a conductive agent as in the case of the positive electrode.

[Separator]

As the separator 13, for example, a porous sheet having an ion permeation property and an insulating property is used. Specific examples of the porous sheet include fine porous thin films, woven fabrics, and nonwoven fabrics. Examples of a suitable material of the separator include polyolefins such as polyethylene and polypropylene, and cellulose. The separator 13 may be a laminate including a cellulose fiber layer and a thermoplastic resin fiber layer of an olefin-based resin or the like. The separator 13 may be a multilayer separator including a polyethylene layer and a polypropylene layer, and a separator may be used in which a material such as an aramid-based resin or ceramic is applied to the surface of the separator 13.

EXAMPLES

Hereinafter, the present disclosure will be further described with reference to Example and Comparative Examples, but the present disclosure is not limited to the following Example.

[Production of Positive Electrode Active Material]

<Example>

Sodium lauryl sulfate as a surfactant was dissolved in water to produce a 10 mass% aqueous solution. A lithium transition metal composite oxide having a composition of $LiNi_{0.9}Co_{0.05}Al_{0.05}O_2$ was added to the aqueous solution, and the resulting mixture was stirred to prepare a suspension having a concentration of 1000 g/L. The suspension was filtered, and a WO$_3$ powder was added and mixed into the obtained residue so that the amount of W was 0.1 mol% with respect to the total amount of metal elements excluding Li in the lithium wire metal composite oxide, and then the mixture was fired in a vacuum. Thus, a positive electrode active material was obtained in which WO$_3$ was adhered to the surface of the composite material including the lithium transition metal composite oxide having a surface on which the carbonaceous film was formed. As a result of observing the composite material with a transmission electron microscope (TEM), the thickness of the carbonaceous film was 10 nm. As a result of observation by energy dispersive X-ray spectroscopy (TEM-EDX), a peak attributed to S was observed in the vicinity of 2.2 keV, and the presence of S in the carbonaceous film was confirmed. Furthermore, the presence of Na in the carbonaceous film was confirmed by XPS analysis.

[Production of Positive Electrode]

A mixture of 100 parts by mass of the positive electrode active material, 1.1 parts by mass of acetylene black, and 0.9 parts by mass of polyvinylidene fluoride was prepared, and the mixture was mixed with N-methyl-2-pyrrolidone (NMP) to prepare a positive electrode mixture slurry. Subsequently, the positive electrode mixture slurry was applied to one surface of a positive electrode current collector made of an aluminum foil having a thickness of 15 μm, the resulting coating film was dried, and then the coating film was rolled with a rolling roller, and cut into a predetermined electrode size to produce a positive electrode for evaluation. The positive electrode was provided with a region to function as a positive electrode of 20 mm × 20 mm and a connection region for connection with a lead of 5 mm × 5 mm. Furthermore, the positive electrode mixture layer formed on the connection region was then scraped off to expose the positive electrode current collector. Then, the exposed portion of the positive electrode current collector was connected to a positive electrode lead, and a predetermined region on the outer periphery of the positive electrode lead was covered with an insulating film.

[Production of Negative Electrode]

A lithium metal foil (thickness: 300 μm) was cut into a size of 25 mm × 25 mm to obtain a negative electrode for evaluation. The lithium metal foil was connected to a negative electrode lead via a Ni mesh of 5 mm × 5 mm, and a predetermined region on the outer periphery of the negative electrode lead was covered with an insulating film.

[Preparation of Non-Aqueous Electrolyte]

Ethylene carbonate (EC), ethyl methyl carbonate (EMC), and dimethyl carbonate (DMC) were mixed at a volume ratio of 20 : 5 : 75. Lithium hexafluorophosphate ($LiPF_6$) was dissolved in the mixed solvent so that the resulting solution had a concentration of 1.3 mol/liter, and thus a non-aqueous electrolyte (non-aqueous electrolytic solution) was prepared.

[Production of Battery for Evaluation]

A battery for evaluation was produced using the positive electrode and the negative electrode for evaluation. First, the positive electrode and the negative electrode were disposed to face each other with a separator interposed therebetween so that the positive electrode mixture layer and the negative electrode lithium metal layer overlap each other, and thus an electrode plate group was obtained. Next, an Al laminate film (thickness: 100 μm) cut into a rectangular shape of 60 × 90 mm was folded in half, and an end on a long side of 60 mm was thermally sealed at 230°C to form a cylindrical shape of 60 × 45 mm. Then, the produced electrode plate group was placed in the cylinder, and the positions of the end face of the Al laminate film and the insulating film of each lead were aligned with each other and thermally sealed at 230°C. Next, 0.3 cm$^3$ of the non-aqueous electrolytic solution was injected from the short side, which was not thermally sealed, of the Al laminate film. After the injection, the Al laminate film was allowed to stand still for 3 minutes under a reduced pressure of 0.06 MPa, and each mixture layer was impregnated with the electrolytic solution. Finally, the end face of the Al laminate film on the injection side was thermally sealed at 230°C to produce a battery for evaluation. The battery for evaluation was produced under a dry environment with a dew point less than or equal to -50°C.

[Evaluation of Direct-Current Internal Resistance (DCIR)]

Under a temperature environment of 25°C, the battery was charged at a constant current of 0.2 C to 4.3 V, and then charged at a constant voltage of 4.3 V to 0.05 C. Then, constant current discharge was performed at a constant current of 0.2 C until the cell voltage reached 2.5 V. Next, constant current charge was performed at 0.2 C until the state of charge (SOC) reached 50%. Then, the battery was rested for 2 hours, the resistance value was calculated from the voltage drop before and after discharging at a current of 0.3 C for 30 seconds, and this value was regarded as DCIR.

[Charge/Discharge Cycle Test]

Under a temperature environment of 25°C, the battery was charged at a constant current of 0.2 C to 4.3 V, and then charged at a constant voltage of 4.3 V to 0.05 C. Then, constant current discharge was performed at 0.2 C to 2.5 V. This charging and discharging was regarded as one cycle, and 100 cycles were performed. Then, the capacity retention rate of the secondary battery in the charge/discharge cycle was determined with the following equation. Table 1 summarizes the results.

Capacity retention rate = (discharge capacity at 100th cycle/discharge capacity at 1st cycle) × 100

<Comparative Example 1>

A battery for evaluation was produced in the same manner as in Example except that the lithium transition metal composite oxide was used as a positive electrode active material, and evaluation of DCIR and a charge/discharge cycle test were performed.

<Comparative Example 2>

A battery for evaluation was produced in the same manner as in Example except that sodium lauryl sulfate was not dissolved in water, and evaluation of DCIR and a charge/discharge cycle test were performed.

<Comparative Example 3>

A battery for evaluation was produced in the same manner as in Example except that a $WO_3$ powder was not added and mixed, and evaluation of DCIR and a charge/discharge cycle test were performed.

Table 1 shows the results of the DCIRs of the batteries of Example and Comparative Examples 1 to 3 and the capacity retention rates in the charge/discharge cycle tests. The DCIRs and the capacity retention rates of Example and Comparative Examples other than Comparative Example 1 shown in Table 1 are relative values with respect to 100 of the values in Comparative Example 1.

[Table 1]

| | Positive electrode active material | | | DCIR [index] | Capacity retention rate [index] |
|---|---|---|---|---|---|
| | Lithium transition metal composite oxide | Metal oxide | Carbonaceous film | | |
| Example | NCA | $WO_3$ | Present | 84.0 | 108.3 |
| Comparative Example 1 | NCA | Absent | Absent | 100 | 100 |
| Comparative Example 2 | NCA | $WO_3$ | Absent | 100 | 100.7 |
| Comparative Example 3 | NCA | Absent | Present | 89.3 | 101.9 |
| NCA:$LiNi_{0.9}Co_{0.05}Al_{0.05}O_2$ | | | | | |

As shown in Table 1, the battery of Example had a lower DCIR and a higher capacity retention rate in the charge/discharge cycle test than the batteries of Comparative Examples 1 to 3. From the results, it can be said that the direct-current internal resistance of a battery can be reduced and charge/discharge cycle characteristics can be improved if a positive electrode active material as follows is used in the battery. The positive electrode active material includes a composite material including a lithium transition metal composite oxide and a carbonaceous film formed on a surface of the lithium transition metal composite oxide, and includes a metal oxide including at least one of W, Mo, or Nb, and the carbonaceous film contains at least one of an alkali metal other than Li or an alkaline earth metal.

The present disclosure is further described by the following embodiments.

Configuration 1:

A positive electrode active material including:

a composite material including a lithium transition metal composite oxide and a carbonaceous film formed on a surface of the lithium transition metal composite oxide; and
a metal oxide including at least one of W, Mo, or Nb,
the carbonaceous film containing at least one of an alkali metal other than Li or an alkaline earth metal.

Configuration 2:

The positive electrode active material according to Configuration 1, in which the metal oxide is adhered to a surface of the composite material.

Configuration 3:

The positive electrode active material according to Configuration 1 or 2, in which the metal oxide contains tungsten oxide.

Configuration 4:

The positive electrode active material according to Configuration 3, in which the tungsten oxide contains $WO_3$.

Configuration 5:

The positive electrode active material according to any one of Configurations 1 to 4, in which the carbonaceous film further contains S.

Configuration 6:

The positive electrode active material according to any one of Configurations 1 to 5, in which the carbonaceous film contains at least one of Na or K.

Configuration 7:

The positive electrode active material according to any one of Configurations 1 to 6, in which the lithium transition metal composite oxide contains Co at a content of less than or equal to 5 mol% with respect to a total number of moles of metal elements excluding Li.

Configuration 8:

The positive electrode active material according to any one of Configurations 1 to 7, in which the lithium transition metal composite oxide is represented by a general formula $Li_aNi_{1-x-y}Mn_xM_yO_{2+b}$ in which $0.9 \leq a \leq 1.1$, $0 \leq x \leq 0.5$, $0 \leq y \leq 0.1$, $0.5 \leq 1 - x - y \leq 0.95$, and $-0.05 \leq b \leq 0.05$ are satisfied, and M represents an element other than Li, Ni, Mn, and oxygen.

Configuration 9:

The positive electrode active material according to any one of Configurations 1 to 8, in which the carbonaceous film has a thickness of less than or equal to 30 nm.

Configuration 10:

A secondary battery including:

a positive electrode including the positive electrode active material according to any one of Configurations 1 to 9;
a negative electrode; and
an electrolyte.

REFERENCE SIGNS LIST

| | |
|---|---|
| 10 | Secondary battery |
| 11 | Positive electrode |
| 12 | Negative electrode |
| 13 | Separator |
| 14 | Electrode assembly |
| 15 | Battery case |
| 16 | Case body |
| 17 | Sealing assembly |
| 18, 19 | Insulating plate |
| 20 | Positive electrode lead |

21      Negative electrode lead
22      Projecting portion
23      Filter
24      Lower vent member
25      Insulating member
26      Upper vent member
27      Cap
28      Gasket

**Claims**

1.  A positive electrode active material comprising:

    a composite material including a lithium transition metal composite oxide and a carbonaceous film formed on a surface of the lithium transition metal composite oxide; and
    a metal oxide including at least one of W, Mo, or Nb,
    the carbonaceous film containing at least one of an alkali metal other than Li or an alkaline earth metal.

2.  The positive electrode active material according to claim 1, wherein the metal oxide is adhered to a surface of the composite material.

3.  The positive electrode active material according to claim 1 or 2, wherein the metal oxide contains tungsten oxide.

4.  The positive electrode active material according to claim 3, wherein the tungsten oxide contains $WO_3$.

5.  The positive electrode active material according to claim 1 or 2, wherein the carbonaceous film further contains S.

6.  The positive electrode active material according to claim 1 or 2, wherein the carbonaceous film contains at least one of Na or K.

7.  The positive electrode active material according to claim 1 or 2, wherein the lithium transition metal composite oxide contains Co at a content of less than or equal to 5 mol% with respect to a total number of moles of metal elements excluding Li.

8.  The positive electrode active material according to claim 1 or 2, wherein the lithium transition metal composite oxide is represented by a general formula $Li_aNi_{1-x-y}Mn_xM_yO_{2+b}$ wherein $0.9 \leq a \leq 1.1$, $0 \leq x \leq 0.5$, $0 \leq y \leq 0.1$, $0.5 \leq 1-x-y \leq 0.95$, and $-0.05 \leq b \leq 0.05$ are satisfied, and M represents an element other than Li, Ni, Mn, and oxygen.

9.  The positive electrode active material according to claim 1 or 2, wherein the carbonaceous film has a thickness of less than or equal to 30 nm.

10. A secondary battery comprising:

    a positive electrode including the positive electrode active material according to claim 1 or 2;
    a negative electrode; and
    an electrolyte.

# Figure 1

## INTERNATIONAL SEARCH REPORT

| International application No. |
| --- |
| **PCT/JP2024/032517** |

### A. CLASSIFICATION OF SUBJECT MATTER

*H01M 4/525*(2010.01)i; *H01M 4/36*(2006.01)i; *H01M 4/131*(2010.01)i; *H01M 4/505*(2010.01)i
FI:  H01M4/525; H01M4/36 C; H01M4/505; H01M4/131

According to International Patent Classification (IPC) or to both national classification and IPC

### B. FIELDS SEARCHED

Minimum documentation searched (classification system followed by classification symbols)

H01M4/525; H01M4/36; H01M4/131; H01M4/505

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | US 2015/0243970 A1 (SAMSUNG SDI CO., LTD.) 27 August 2015 (2015-08-27) claims 1, 2, 8, 11, 12, 14, paragraphs [0063], [0096], [0128] | 1-10 |
| Y | JP 2014-143032 A (HITACHI, LTD.) 07 August 2014 (2014-08-07) claims 2, 11, 19, paragraphs [0009]-[0010], [0053] | 1-10 |

☐ Further documents are listed in the continuation of Box C.          ☑ See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **29 October 2024** | **10 December 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

INTERNATIONAL SEARCH REPORT
Information on patent family members

| Patent document cited in search report | | | Publication date (day/month/year) | Patent family member(s) | | Publication date (day/month/year) |
|---|---|---|---|---|---|---|
| US | 2015/0243970 | A1 | 27 August 2015 | KR 10-2015-0101873 | A | |
| JP | 2014-143032 | A | 07 August 2014 | (Family: none) | | |

International application No.

**PCT/JP2024/032517**

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009140876 A

- JP 2001015111 A